# EUROPEAN PATENT APPLICATION

(11) **EP 2 063 237 A1**
(43) Date of publication of application: **27.05.2009**
(21) Application number: 08290957.3
(22) Date of filing: 10.10.2008
(51) Int. Cl.: G01G 19/393

(54) **A scale for a packaging machine**

(30) Priority: 26.11.2007 AU 2007906448 P
(71) Applicant: TNA Australia PTY Limited, Lidcombe, New South Wales 2141 (AU)
(72) Inventor: Taylor, Alfred Alexander, Lugarno, New South Wales 2210 (AU); Alchin, Darren Ken, Hammondville, New South Wales 2170 (AU)
(74) Representative: Hirsch & Associés

(57) **Abstract**

A scale assembly (10) including a plurality of buckets (11). The buckets (11) are arranged in two sets (12, 13), each set of buckets (11) of each set (12, 13) being located on a respective path (31, 32). The paths (31, 32) are spaced radially from a respective longitudinal axis (25, 26) with the buckets (11) being equally spaced from their respective longitudinal axis (25, 26).

## Description

### Technical Field

The present invention relates to scale assemblies and more particularly but not exclusively for scale assemblies adapted to deliver weighed batches of product to a packaging machine.

### Background of the Invention

Packaging machines that are typically used to package snack foods receive batches of product to be packaged from a scale assembly generally located above the packaging machine. For example, the packaging machine of USA Patent 4663917 would typically receive batches of product from a scale assembly such as that described in USA Patent 6903279 or European Patent 1340677.

The scale assemblies have a plurality of buckets with a bottom wall that is pivotable between a closed position and an open position. In the open position the weighed batch of product is released from the bucket and travels down a chute to be delivered to the interior of the bag being formed.

It has been found advantageous to have two packaging machines fed by a single scale assembly. This has necessitated each scale assembly to have two outlets, each outlet being operatively associated with a respective downstream packaging machine, that is a packaging machine located directly below the outlet.

When forming bags of the product, the accurate delivery of batches to the packaging machine is critical to the efficient speedy operation of the packaging machine. This accuracy includes the batches of product being delivered in a predictable and timely manner to the packaging machine.

The above discussed scale assembly that has two outlets has the disadvantage in that the distance the product must travel varies according to the location of the particular bucket relative to its outlet. Accordingly the travel time is to a certain extent unpredictable.

### Object of the Invention

It is the object of the present invention to overcome or substantially ameliorate the above disadvantage.

### Summary of the Invention

There is disclosed herein a scale assembly to which product is delivered to be weighed in batches, said assembly including:
a first outlet and a second outlet, the outlets being provided to received weighed batches of product;
a plurality of buckets, each bucket being provided to weigh a batch of product and to release weighed batches for delivery to one of the outlets, the buckets being arranged in two sets including a first set of buckets and a second set of buckets, each set including a plurality of the buckets, with said first set of buckets being operatively associated with said first outlet, and said second set of buckets being operatively associated with said second outlet; and wherein
the buckets of said first set are arranged relative to said first outlet so that the buckets are substantially uniformly displaced therefrom, and the buckets of said second set are arranged relative to said second outlet so as to be substantially uniformly displaced therefrom.

Preferably, each outlet has a generally upright longitudinal axis, with the buckets of each set being arranged angularly about the longitudinal axis of the respective outlet so as to be generally equally radially displaced therefrom.

Preferably, the buckets are uniformly displaced in respect of height from their respective outlets.

Preferably, each set of buckets extends angularly about the associated longitudinal axis by an angle equal to or greater than 180° but less than 360°.

Preferably, in each set, each bucket that is located between two adjacent buckets is equally angularly displaced from the two adjacent buckets.

Preferably, each set includes fourteen buckets.

Preferably, said assembly includes a plurality of chutes, each chute being operatively associated with a respective bucket so as to extend between the associated bucket and the associated outlet.

Preferably, each outlet is provided by an outlet chute to which the batches are delivered from the associated set of buckets.

Preferably, the buckets of said first set are displaced from the longitudinal axis of said first outlet by a radius, and the buckets of said second set are displaced from the longitudinal axis of said outlet also by said radius.

Preferably, the longitudinal axes are transversely spaced by a distance less than twice said radius.

Preferably, each set of buckets is located on an arcuate path extending through an angle of 230° to 235°.

Preferably, said angle is about 235°.

Preferably, the angle of the paths are approximately equal.

### Brief Description of the Drawings

A preferred form of the present invention will now be described by way of example with reference to the accompanying drawings wherein:
Figure 1 is a schematic isometric view of a scale assembly;
Figure 2 is a schematic end elevation of the assembly of Figure 1;
Figure 3 is a schematic front elevation of the assembly of Figure 1; and
Figure 4 is a schematic sectioned plan view of the assembly of Figure 3 sectioned along the line A-A.

### Detailed Description of the Preferred Embodiment

In the accompanying drawings there is schematically depicted a scale assembly 10. The scale assembly 10 would typically deliver weighed batches of product to packaging machines such as that disclosed in the abovementioned USA Patent 4663917. More particularly the assembly 10 would deliver weighed batches of product (such as a snack food) to two adjacent packaging machines.

The assembly 10 includes a plurality of weighing buckets 11 that received product in batches, weigh the batches and then release the batches for delivery to the associated packaging machines. The buckets 11 are arranged in a plurality of sets, in this embodiment there are two sets 12 and 13. However a greater number of sets can be used.

The set 12 is operatively associated with an outlet 14 while the set 13 is operatively associated with an outlet 15. The outlets 14 and 15 are provided by conical outlet chutes 16. Each chute 16 has a lower opening 17 via which product leaves the assembly 10 for delivery to a "shoulder" that forms tubular bag material and into which the batches are delivered so that the packaging machine may form discrete packages of product.

Each set 12 and 13 communicates with its associated outlet 14 or 15 by means of a set of chutes 18 or 19. More particularly product from the set 12 is delivered to its associated outlet 14 by a set of chutes 18, while product from the set 13 is delivered to its associated outlet 15 by the set of chutes 19. Each chute 18 and 19 has an upper end associated with a specific bucket 11, and a lower end delivering material to the upper opening 20 of the respective chute 16.

Each assembly has an upper funnel 21 to which the product is delivered via a conveyor. The funnel 21 directs the product to a cone 22 wherefrom the product is delivered to upper storage buckets 23. The product is temporarily stored in the buckets 23 for delivery to the weighing buckets 11. Each bucket 23 has a hollow body with a lowered door that is moved between an upper and closed position. In the closed position the product is stored in the buckets 23, while in the open position product is allowed to flow to the buckets 11 under the influence of gravity.

The chutes 16 (that is outlets 14 and 15) each have a respective generally parallel upright longitudinal axis 25 or 26, these longitudinal axes 25 and 26 also being the longitudinal axes of the funnels 21 and cones 22.

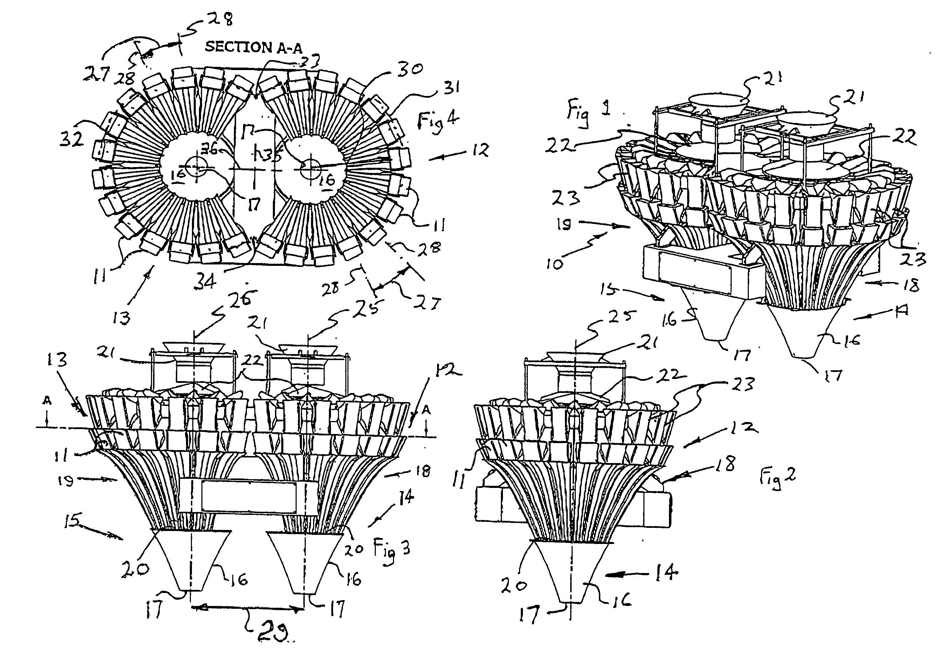

As best seen in Figure 4, the buckets 11 are arranged angularly about their respective longitudinal axis 25 or 26. In particularly the set 12 is arranged angularly about the longitudinal axis 25 while the set 13 is arranged angularly about the longitudinal axis 26. Each of the buckets 11 is displaced by the same radial distance from its respective axis 25, 26, while each bucket 11 is also spaced by the same height (distance) from its respective outlet 14, 15, so that product leaving each bucket 11 travels the same distance to reach its respective chute 16. Accordingly batches released by the buckets 11 travels substantially the same distance to reach their chute 16 and therefore have substantially the same travel time.

As mentioned above, the buckets 11 are arranged angularly about their respective longitudinal axis 25, 26. In particular the buckets 11 are equally angularly spaced by an angle 27, with each set 12 and 13 extending through an angle equal to or greater than 180° but less than 360°. More preferably each bucket 11 has a generally central radial axis 28, with the distance 27 between adjacent axes 28 being approximately 15° to 20°, most preferably about 18°. Preferably each set 12 and 13 has the buckets 11 extending through an angle of about 230° to 240°, preferably about 235° measured from the radial axes 28 of the end buckets 11 of each set 12, 13.

Each of the buckets 11 is spaced from its respective longitudinal axis 25, 26 by a substantially uniform radius 30. The longitudinal axes 25 and 26 are spaced by a distance 29 that is less than twice the radius 30.

As best seen in Figure 4, the buckets 11 of set 12 are arranged along an arcuate path 31. The bucket 11 of the set 13 are arranged along a path 32. The paths 31 and 32 intersect at locations 33 and 34, with the path 31 extending through an angle of about 230° to 240°, preferably about 235°. The angle of the path 31 is approximately equal to the angle of the path 32. The straight line 35 passing through the locations 33 and 34 intersects the centre of the line 36 at about 90°. The line 36 passes through the axes 25 and 26.

## Claims

1. A scale assembly to which product is delivered to be weighed in batches, said assembly including:
a first outlet and a second outlet, the outlets being provided to received weighed batches of product;
a plurality of buckets, each bucket being provided to weigh a batch of product and to release weighed batches for delivery to one of the outlets, the buckets being arranged in two sets including a first set of buckets and a second set of buckets, each set including a plurality of the buckets, with said first set of buckets being operatively associated with said first outlet, and said second set of buckets being operatively associated with said second outlet; and wherein
the buckets of said first set are arranged relative to said first outlet so that the buckets are substantially uniformly displaced therefrom, and the buckets of said second set are arranged relative to said second outlet so as to be substantially uniformly displaced therefrom.

2. The scale assembly of claim 1, wherein each outlet has a generally upright longitudinal axis, with the buckets of each set being arranged angularly about the longitudinal axis of the respective outlet so as to be generally equally radially displaced therefrom.

3. The scale assembly of claim 1 or 2, wherein the buckets are uniformly displaced in respect of height from their respective outlets.

4. The scale assembly of claim 1, 2 or 3, wherein each set of buckets extends angularly about the associated longitudinal axis by an angle equal to or greater than 180° but less than 360°.

5. The scale assembly of any one of claims 1 to 4, wherein in each set, each bucket that is located between two adjacent buckets is equally angularly displaced from the two adjacent buckets.

6. The scale assembly of any one of claims 1 to 5, wherein each set includes fourteen buckets.

7. The scale assembly of any one of claims 1 to 6, wherein said assembly includes a plurality of chutes, each chute being operatively associated with a respective bucket so as to extend between the associated bucket and the associated outlet.

8. The scale assembly of any one of claims 1 to 7, wherein each outlet is provided by an outlet chute to which the batches are delivered from the associated set of buckets.

9. The scale assembly of claim 2, or any one of claims 3 to 8 when appended to claim 2, the buckets of said first set are displaced from the longitudinal axis of said first outlet by a radius, and the buckets of said second set are displaced from the longitudinal axis of said outlet also by said radius.

10. The scale assembly of claim 9, wherein the longitudinal axes are transversely spaced by a distance less than twice said radius.

11. The scale assembly of any one of claims 1 to 10, wherein each set of buckets is located on an arcuate path extending through an angle of 230° to 235°.

12. The scale assembly of claim 11, wherein said angle is about 235°.

13. The scale assembly of claim 11 or 12, wherein the angle of the paths are approximately equal.
